# EUROPEAN PATENT SPECIFICATION

(11) **EP 4 454 527 B1**
(45) Date of publication and mention of the grant of the patent: **15.04.2026**
(21) Application number: 24170631.6
(22) Date of filing: 16.04.2024
(51) Int. Cl.: A47L 7/00, A47L 9/10, A47L 9/14, A47L 9/24, A01K 13/00

(54) **CLEANING TOOL FOR A SURFACE CLEANER**
REINIGUNGSWERKZEUG FÜR EINEN OBERFLÄCHENREINIGER
OUTIL DE NETTOYAGE POUR UN NETTOYEUR DE SURFACE

(30) Priority: 25.04.2023 US 202363461764 P
(43) Date of publication of application: 30.10.2024
(73) Proprietor: BISSELL Inc., Grand Rapids, MI 49544 (US)
(72) Inventor: SMITH, Derek, Grand Rapids, 49544 (US)
(74) Representative: Sandersons

(56) References cited:
- US-A- 5 375 293
- US-B1- 6 766 558
- US-B2- 9 474 424

## Description

### FIELD

The present invention generally relates to a cleaning tool for a surface cleaner and, more particularly, to a cleaning tool for selective attachment to an extraction cleaner.

### BACKGROUND

Surface cleaners, such as vacuum cleaners, use suction to collect debris and/or fluid to clean soft surfaces, such as carpets, flooring, rugs, upholstery, and the like, as well as hard surfaces including wood, vinyl, tile, composites, etc. Surface cleaners can be in the form of extraction cleaners that are used to clean surfaces by applying a cleaning solution and then extracting the cleaning solution and entrained debris. Other cleaning apparatuses, such as those with attachments for vacuum cleaning systems, can be seen in US5375293 A.

### SUMMARY

According to the present invention as claimed in claim 1, an extraction cleaner includes an accessory hose and a suction source. The extraction cleaner includes a hose in fluid communication with the suction source. A cleaning tool that is adapted to couple with the hose includes a tool housing that defines a suction pathway in fluid communication with the suction source. The suction source includes a body that defines an access opening to a tool interior, a suction nozzle that defines a tool nozzle inlet in communication with the suction pathway, an adapter coupling that defines an outlet to the suction pathway and is configured to selectively couple the tool with the hose, and a filter receptacle that is disposed within the tool interior and includes a filter material that is configured to capture debris within the filter receptacle while allowing air to flow through the suction pathway, wherein the filter receptacle includes a frame defining openings and the filter material is disposed within the openings.

According to another aspect of the present invention, a cleaning tool is adapted to couple with a hose of an extraction cleaner. The cleaning tool includes a tool housing that defines a suction pathway. The suction pathway includes a body that defines an access opening to a tool interior, a suction nozzle that defines a tool nozzle inlet in communication with the suction pathway, an adapter coupling that is configured to selectively attach the cleaning tool to the extraction cleaner hose, the adapter coupling defining an outlet to the suction pathway, and a filter receptacle disposed within the tool interior and configured to capture debris within the filter receptacle while allowing air to flow through the suction pathway.

According to yet another aspect of the present invention, a cleaning tool for selective attachment to an extraction cleaner includes an accessory hose and a suction source. The tool housing defines a suction pathway that includes a first body portion, a second body portion selectively coupled to the first body portion that thereby defines a tool interior, a suction nozzle disposed at a forward portion of the tool housing that defines a tool nozzle inlet in communication with the suction pathway, and an adapter coupling that is configured to receive one of a wand and an accessory hose and defines an outlet to the suction pathway, and a removable filter basket disposed within the tool interior and including a filter material configured to capture debris within the removable filter basket while allowing air to flow through the suction pathway.

These and other features, advantages, and objects of the present invention will be further understood and appreciated by those skilled in the art by reference to the following specification, claims, and appended drawings.

### BRIEF DESCRIPTION OF THE DRAWINGS

In the drawings:
FIG. 1 is a top perspective view of a cleaning tool for an extraction cleaner, according to various aspects of the present invention;
FIG. 2 is a side elevational view of a cleaning tool for an extraction cleaner, according to various aspects of the present invention;
FIG. 3 is a side cross-sectional view of the cleaning tool of FIG. 1 taken through line III-III of FIG. 1;
FIG. 4 is a bottom perspective view of a cleaning tool for an extraction cleaner, according to various aspects of the present invention;
FIG. 5 is an exploded, side perspective view of a cleaning tool for an extraction cleaner, according to various aspects of the present invention;
FIG. 6 is a front perspective view of a cleaning tool for an extraction cleaner shown in one example of a separated position, according to aspects of the present invention; and
FIG. 7 is a top perspective view of a cleaning tool for an extraction cleaner shown in another example of a separated position, according to various aspects of the present invention.

### DETAILED DESCRIPTION

The present illustrated embodiments reside primarily in combinations of method steps and apparatus components related to a cleaning tool for an extraction cleaner. Accordingly, the apparatus components and method steps have been represented, where appropriate, by conventional symbols in the drawings, showing only those specific details that are pertinent to understanding the embodiments of the present invention so as not to obscure the invention with details that will be readily apparent to those of ordinary skill in the art having the benefit of the description herein. Further, like numerals in the description and drawings represent like elements.

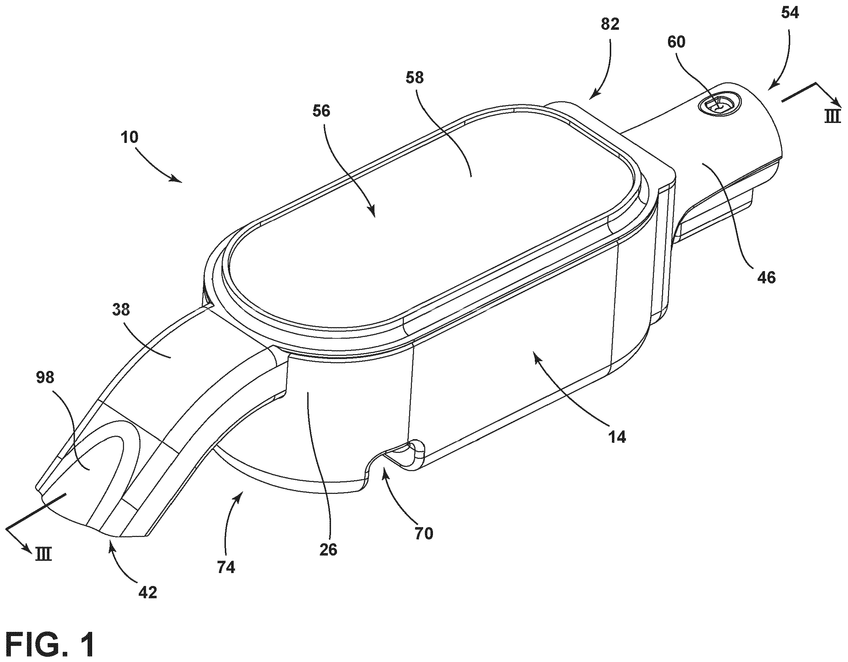

For purposes of description herein, the terms "upper," "lower," "right," "left," "rear," "front," "vertical," "horizontal," and derivatives thereof, shall relate to the invention as oriented in FIG. 1. Unless stated otherwise, the term "front" shall refer to a surface closest to an intended viewer, and the term "rear" shall refer to a surface furthest from the intended viewer. However, it is to be understood that the invention may assume various alternative orientations, except where expressly specified to the contrary. It is also to be understood that the specific structures and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ..." does not, without more constraints, preclude the existence of additional identical elements in the process, method, article, or apparatus that comprises the element.

With reference to FIGS. 1-7, reference numeral 10 generally designates a cleaning tool for a surface cleaner 12 that includes a tool housing 14 and a filter receptacle 18. The tool housing 14 at least partially defines a suction pathway 22. The tool housing 14 includes a body 26 defining an access opening 30 to a tool interior 34, a suction nozzle 38 defining a tool nozzle inlet 42 that is in communication with the suction pathway 22, and an adapter coupling 46 configured to selectively attach the cleaning tool to the surface cleaner 12. The adapter coupling 46 defines an outlet 54 to the suction pathway 22. The filter receptacle 18 is disposed within the tool interior 34 and is configured to capture debris within the filter receptacle while allowing air to flow through the suction pathway 22.

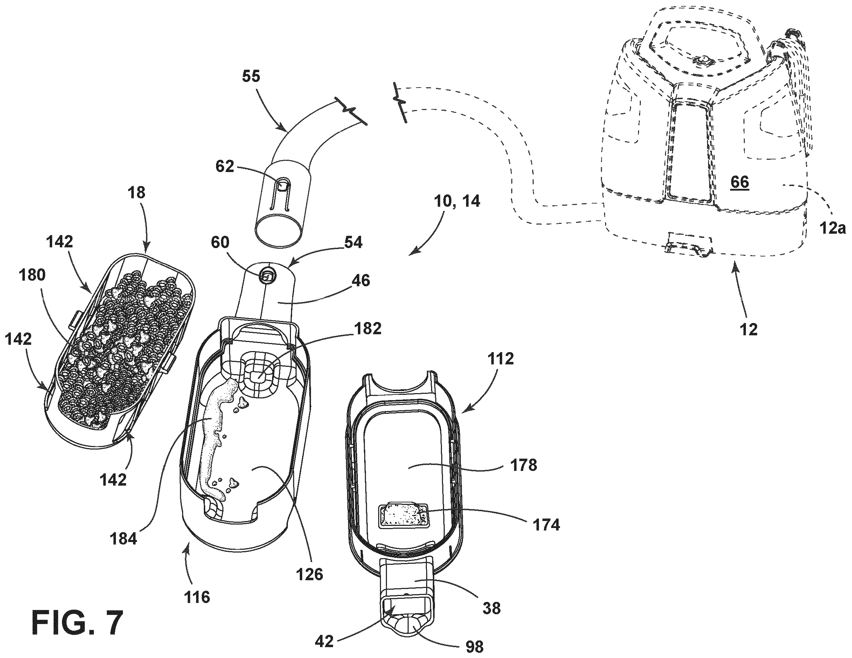

Portable surface cleaning apparatuses, such as the surface cleaner 12, shown in phantom in FIG. 7 and as described herein, are configured to be carried by a user to perform a cleaning operation, and are, therefore, portable. These portable surface cleaning apparatuses may perform the same, or similar, functions as upright surface cleaning apparatuses. Portable surface cleaning apparatuses (e.g., portable extraction cleaners), and upright surface cleaning apparatuses can provide a suction effect to extract debris that is on or in an underlying surface. In general, portable surface cleaning apparatuses are smaller and lighter than upright surface cleaning apparatuses. Further, while various aspects of the invention are described with respect to the surface cleaner 12, it is within the scope of the invention for the surface cleaner 12 to include any suitable cleaner, including, but not limited to, various extraction cleaners, handheld cleaners, and upright surface cleaning apparatuses. Thus, the surface cleaner 12 may be used with an accessory hose of any surface cleaner, including dry vacuum cleaners.

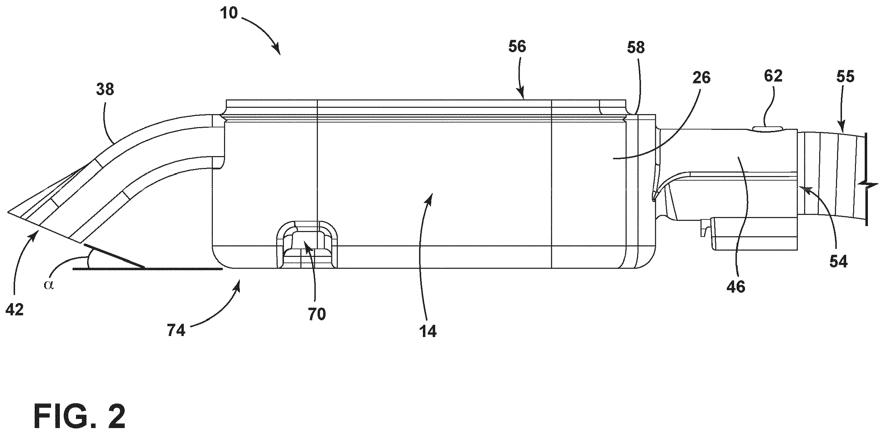

Referring now to FIG. 7, the cleaning tool 10 can be coupled with the surface cleaner 12 to provide suction and/or deliver a cleaning fluid to a surface to be cleaned. In some examples, the surface cleaner 12 can include a housing 12a that accommodates various components and functional systems of the surface cleaner 12. For example, a recovery assembly is provided for removing and temporarily storing (e.g., in a recovery tank) debris and/or excess cleaning fluid from the surface. Further, a fluid delivery system may be provided for distributing cleaning fluid to the surface. Non-limiting examples of extraction cleaners that the cleaning tool 10 can be utilized with are disclosed in U.S. Patent No. 9,474,424; U.S. Patent No. 8,549,697; U.S. Patent No. 7,073,226; U.S. Patent No. 10,188,252; and U.S. Patent No. 9,107,558. As illustrated in FIG. 7, the exemplary surface cleaner 12 includes a flexible hose 55, or an "accessory hose," that can be selectively fluidly coupled to the cleaning tool 10 and forms a least a portion of the suction pathway 22 therethrough. Thus, the flexible hose 55 can provide a fluid delivery pathway and an airflow pathway from the surface cleaner 12 to the cleaning tool 10. As illustrated in FIG. 2, the cleaning tool 10 can be directly coupled with the flexible hose 55 via the adapter coupling 46. Thus, the cleaning tool 10 is adapted to couple with the hose 55. Alternatively, the cleaning tool 10 can be directly coupled with the surface cleaner 12 or with another accessory or adaptor, such as a wand, that is in fluid communication with the flexible hose 55 and/or the surface cleaner 12.

Still referring to FIG. 7, a suction source 66 (e.g., an impeller assembly) carried by the surface cleaner 12 can be in fluid communication with the suction nozzle 38 of the cleaning tool 10 via the suction pathway 22. The suction source 66 is configured to generate a working air stream through the suction pathway 22. The suction source 66 may be positioned within a main housing assembly of the surface cleaner 12. However, it is within the scope of the invention for the suction source 66 to be positioned in any suitable location to provide suction through the suction nozzle 38. In this way, the tool nozzle inlet 42, the suction nozzle 38, and the flexible hose 55 can be in fluid communication with the suction source 66 to form at least a portion of a suction pathway 22 such that a working airflow therefrom can draw liquid and entrained debris into the cleaning tool 10.

The term "debris," as used herein, may include dirt, dust, soil, hair, chunky messes, loose material, or other messy substances, etc. The term "recovered fluid," as used herein, primarily encompasses liquids which are recovered from a surface, and may include water, gunk, grime, filthy compositions, cleaning fluids, etc., or mixtures thereof. The term "cleaning fluid," as used herein, primarily encompasses liquids which are provided to a surface, and may include steam, water, compositions, concentrated detergent, diluted detergent, fragrances, deodorizers, etc., or mixtures thereof.

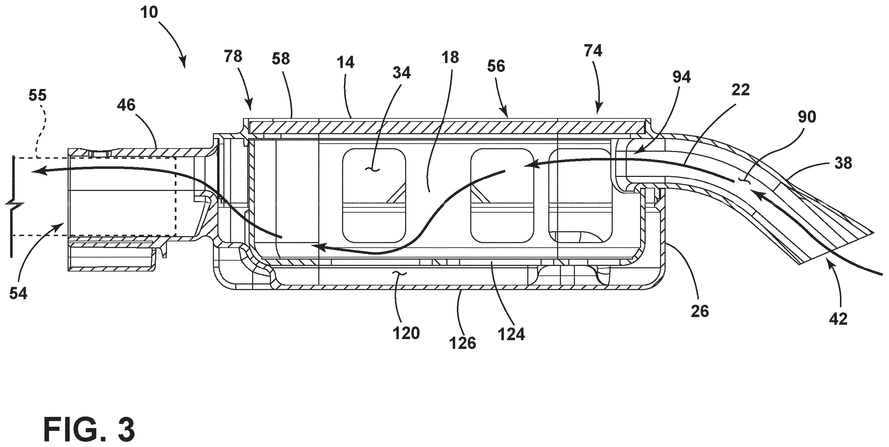

Referring now to FIG. 1, the tool housing 14 includes a window 56. The window 56 may be made of an at least partially transparent material such that the tool interior 34 is viewable therethrough. The window 56 may form a majority of an upper surface 58 of the tool housing 14. In this way, most of the tool interior 34 (FIG. 3) may be viewed through the window 56. However, it is within the scope of the invention for the window 56 to form a limited portion of the upper surface 58 such that a minority of the tool interior 34 may be viewed through the window 56. In some implementations, the window 56 is substantially transparent (e.g., configured to allow about 50% or more of visible light to be transmitted). In some examples, the window 56 is made of a plastic, such as clear acrylic. Optionally, the at least partially transparent material of the window 56 may include a polymer composed of one or more of acrylic, polycarbonate (PC), cycloolefin copolymer (COC), polyethylene terephthalate (PET), polyethylene naphthalate (PEN), polyimide, high density polyethylene (HDPE), polysulfone, acrylonitrile butadiene styrene (ABS), polychlorotrifluoroethylene, polyphenylene sulfide, polymethyl methacrylate (PMMA), polyvinyl alcohol (PVA), ethylene vinyl alcohol (EVOH), other translucent materials, and/or combinations thereof.

Turning to FIG. 2, the cleaning tool 10 is coupled with the flexible hose 55. For brevity, only a portion of the flexible hose 55 is shown in FIG. 2, as indicated by break lines. In some aspects, the adapter coupling 46 can selectively couple the cleaning tool 10 with the surface cleaner 12 through the flexible hose 55 via any suitable coupler provided at an end of the flexible hose 55. For example, the adapter coupling 46 may define an aperture 60 configured to receive a tab 62 on a distal end of the flexible hose 55. In this way, the flexible hose 55 can slide into engagement with the adapter coupling 46 where the tab 62 is retained within the aperture 60. The flexible hose 55 can be removed from the adapter coupling 46 upon depression of the tab 62 and pulling the flexible hose 55 away from the adapter coupling 46. However, the adapter coupling 46 may include any suitable retention feature to selectively couple the cleaning tool 10 with the flexible hose 55 of the surface cleaner 12. For example, the aperture 60 and tab 62 may be omitted where the adapter coupling 46 relies upon a transitional fit with the flexible hose 55. In another example, the adapter coupling 46 may be in the form of a clamp configured to retain the flexible hose 55 thereto. Additionally, the adapter coupling 46 can define the outlet 54 (e.g., a tool outlet) to fluidly connect the cleaning tool 10 to the surface cleaner 12 thereby providing the suction pathway 22 through the cleaning tool 10.

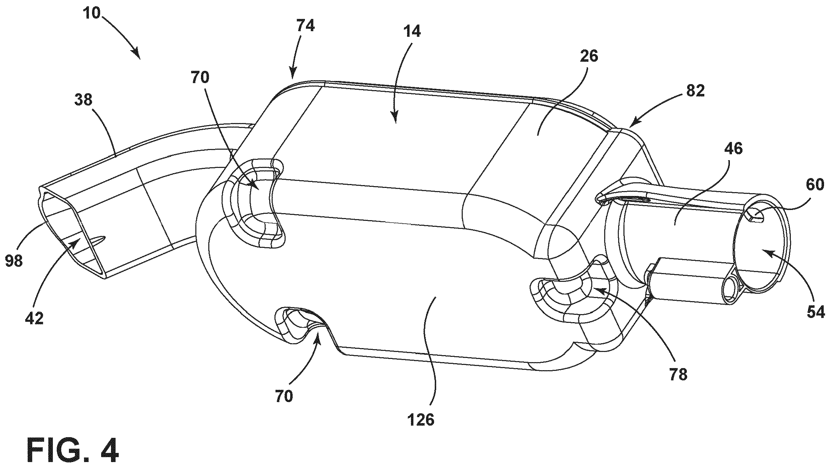

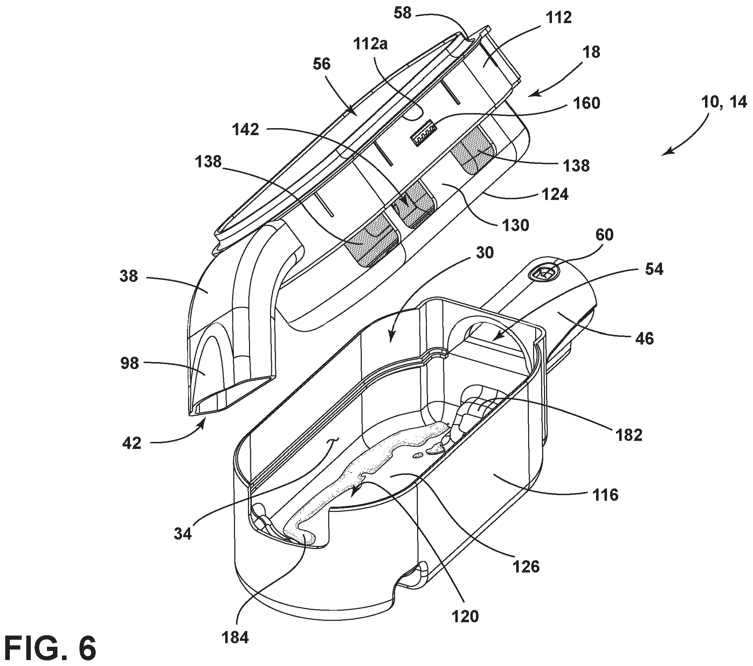

Turning now to FIGS. 1 and 4, the tool housing 14 includes the body 26, the suction nozzle 38 defining the tool nozzle inlet 42, and the adapter coupling 46. The body 26 may be dimensioned to be gripped by a user. The body 26 of the cleaning tool 10 can include recesses 70 sized to accommodate a user's grip (e.g., fingers). As illustrated in FIG. 4, the body 26 includes a pair of recesses 70 defined in a forward portion 74 of the body 26 and a recess 78 defined in a rearward portion 82 of the body 26. The recesses 70, 78 in the body 26 may facilitate gripping of the body 26 for performing a cleaning operation and/or separation of components of the tool housing 14 as described with respect to at least FIG. 6.

Referring now to FIGS. 2 and 3, the suction nozzle 38 is disposed adjacent to the forward portion 74 of the body 26. The tool nozzle inlet 42 is disposed at a distal end of the suction nozzle 38 to interact with the surface to be cleaned. As best shown in FIG. 2, the tool nozzle inlet 42 can include an angular orientation, α, with respect to the body 26 of cleaning tool 10. Therefore, during natural movement of the cleaning tool 10 by a user, the suction nozzle 38 may include additional space from the surface to be cleaned to facilitate ingestion of debris and chunky messes (i.e., messes that include larger debris pieces, such as cereal or pet food, for example). The suction nozzle 38 defines a suction channel 90, or suction air inlet between the tool nozzle inlet 42 and a filter receptacle inlet 94. The suction channel 90 directs the working air stream from the suction pathway 22 into the cleaning tool 10 to extract debris, liquid, and chunky messes from the surface. As the suction pathway 22, which may be an "airflow" pathway, extends from the nozzle inlet 42 through the cleaning tool 10, through the flexible hose 55, and through the surface cleaner 12 via the suction source 66 (e.g., a motor), extracted debris, liquid, etc., can move from the surface through the suction channel 90 and into the filter receptacle 18 using the surface cleaner 12.

As best shown in FIGS. 4 and 7, the tool nozzle inlet 42 can define a generally rectangular opening. The tool nozzle inlet 42 can include sides that may include a ratio of a width to a length of approximately 2:1, 3:1, 3:2, 4:3, 5:4, 5:3, 5:2, 16:9, or 16:10, but are not limited to such examples. In specific implementations, the opening may include side lengths that are approximately in the "golden ratio." For example, the dimensions may be in the ratio according to the formula: (a + b)/a = a/b = Φ, where a is the width, a + b is the length of the rectangle, and Φ is the golden ratio: Φ = (1+√5)/2. For example, for a given side length, x, the width can be equal to x divided by approximately 1.618. Accordingly, the proportions of the sides of the tool nozzle inlet 42 can allow for ingestion of larger debris while also allowing sufficient velocity of the working air stream therethrough. Further, the tool nozzle inlet 42 may include a convex portion 98 at a forward position on the suction nozzle 38 that may also facilitate capture of the debris or chunky messes. It is also within the scope of the invention for the suction nozzle 38 or adjacent portions of the tool body 26 to include agitation features, such as brushes, bristles, and the like, to facilitate separation of debris from the surface.

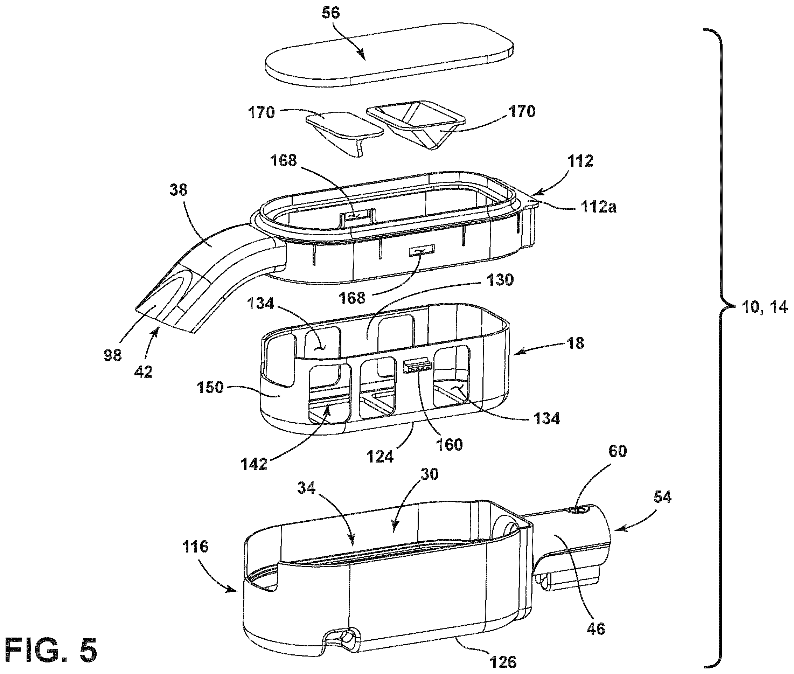

Referring now to FIGS. 5 and 6, the body 26 of the cleaning tool 10 includes a first body portion 112 and a second body portion 116 that is removable from the first body portion 112. In this way, the first and second body portions 112, 116 can be separated, thereby exposing the access opening 30, which may be defined at least in part by the second body portion 116. Accordingly, separation of the first body portion 112 provides selective access to debris or recovered fluid disposed within the tool interior 34 through the access opening 30. The first body portion 112 may nest within the second body portion 116. The first body portion 112 may include a rim 112a that fluidly seals the first body portion 112 and the second body portion 112. Further, the filter receptacle 18 can be removable from the tool housing 14 through the access opening 30.

As illustrated in FIG. 6, the second body portion 116 can function as a basin that collects recovered fluid within the tool interior 34. As such, the recovered fluid can pool within a space 120 (best shown in FIG. 3) that is provided between a bottom wall 124 of the filter receptacle 18 and a lower interior surface 126 of the body 26. In some aspects, a depth of the space 120 can be within a range of 0.5-5 mm but is not limited to such. The space 120 is positioned far enough below the outlet 54 such that any fluid collected in the space 120 can be inhibited from entering the outlet 54. Thus, when the first body portion 112 and the second body portion 116 are separated, a user can access recovered fluid that is collected within the tool interior 34 for disposal. Additionally, while the suction nozzle 38 is illustrated as being carried by the first body portion 112, it is within the scope of the present invention for the suction nozzle 38 to be carried by the second body portion 116.

The filter receptacle 18 may be in the form of a removable filter basket that is configured to collect solid, or chunky, debris to inhibit the debris from entering the space 120 and the outlet 54 to the flexible hose 55. The filter receptacle 18 may be composed of a reusable, lasting material (e.g., a polymer, such as a thermoplastic), or a disposable material, which may include absorbent properties (e.g., a fabric, such as burlap). The filter receptacle 18 includes a frame 130 defining one or more openings 134, which includes a filter material 138 therein. Optionally, the openings 134 may be in the form of a filtering structure defined by the frame 130 (e.g., the filtering structure being composed of a same material as the filter receptacle 18). The filter material 138 or filtering structure is configured to capture debris within the filter receptacle 18 while simultaneously allowing air to flow through the suction pathway 22 to the suction source 66 and to allow liquid to flow through the filter receptacle 18 and collect within the space 120. Accordingly, the filter material 138 can be composed of any suitable material that allows fluid flow therethrough, such as, but not limited to, polyester, nylon, metal, stainless steel, etc... In one example, the filter material 138 is in the form of a mesh and is disposed or positioned within the openings, thereby forming one or more "mesh" regions 142. In some implementations, the filter material 138 may include a pore size in a range of about 40-100 µm. In specific implementations, the filter material 138 may include a pore size of about 50 µm or less and, therefore, may be configured to capture debris larger than 50 µm, but is not limited to such a configuration. In some aspects, the openings 134 are clustered near a forward portion of the filter receptacle 18 while a rearward portion of the filter receptacle 18 (e.g., adjacent the outlet 54 to the suction pathway 22) is solid. In this way, debris and liquid can be hindered from traveling into the outlet 54 without restricting airflow thereto.

As best shown in FIG. 5, the filter receptacle 18 can include mesh regions 142 spaced along a perimeter wall 150 as well as mesh regions 142 formed in the bottom wall 124 of the filter receptacle 18. It is within the scope of the invention for the mesh regions 142 to include filter material 138 of various materials and/or having the same or different pore sizes. For example, a pore size of a first mesh region 142 nearest to the suction nozzle 38 can include a pore size (e.g., 75 µm), which is larger than a pore size of a second mesh region 142 nearest to the outlet 54 (e.g., 40 µm). Therefore, debris may be further hindered from entering the outlet 54.

Still referring to FIGS. 5 and 6, the filter receptacle 18 includes engagement features 160 that are configured to selectively attach the filter receptacle 18 to the body 26. In this way, a user may uncouple the filter receptacle 18 from the body 26. For example, the filter receptacle 18 can be coupled with the first body portion 112, such that the filter receptacle 18 is removable with the first body portion 112. The filter receptacle 18 can then be detached from the first body portion 112 to access the larger debris captured by the filter receptacle 18 for cleaning or disposal purposes. The engagement features 160 can include any suitable configuration to attach the filter receptacle 18 to the body 26. Therefore, it is within the scope of the invention for the filter receptacle 18 to attach to the body 26 at any location, which may include on the second body portion 116. For example, the filter receptacle 18 can be coupled with the second body portion 116, such that the filter receptacle 18 is not removable with the first body portion 112. In this example, the first body portion 112 may be removed to allow a user to empty the contents of the filter receptacle 18 and then the filter receptacle 18 can optionally be removed from the second body portion 116 to empty any material that may have collected in the space 120 and/or for cleaning. As illustrated, the engagement features 160 are in the form of flexible tabs configured to be received within corresponding apertures 168 defined in the body 26 (e.g., in the first body portion 112).

Turning to FIG. 5, the cleaning tool 10 can include at least one baffle 170 disposed within the tool interior 34 to direct debris away from the outlet 54. The baffle(s) 170 can be coupled to the window 56 or another component of the first body portion 112. Optionally, the baffle(s) 170 can be formed with, or coupled to, the second body portion 112 below the outlet 54. For example, the recess 78 (FIG. 4) defined in a rearward portion 82 of the body 26, can form the baffle 170 below the outlet 54. In one example, illustrated in FIG. 7, the cleaning tool 10, can include a first baffle 174 coupled with an upper interior surface 178 of the first body portion 112 and a second baffle 182 coupled with the lower interior surface 126 of the second body portion 116.

Turning now to FIG. 7, the filter receptacle 18 is shown separated from the body 26 such that a user can access the larger debris 180 (e.g., cereal, noodles, pet food, vomit) captured by the filter receptacle 18 for cleaning or disposal purposes. Likewise, the recovered fluid 184 pooled on the lower interior surface 126 of the body 26 can be disposed of. Accordingly, the body 26 (e.g., the first body portion 112 and the second body portion 116) and the filter receptacle 18 can be separated to dispose of the debris and liquid. Advantageously, the interior 34 of the cleaning tool 10 is accessible to clean and sanitize the interior surfaces or components (e.g., 126, 178, 18).

The cleaning tool 10 according to aspects of the present invention provides a variety of benefits. The cleaning tool 10 is intended to capture large debris and, preferably, any liquid within the cleaning tool 10 such that the large debris and liquid are captured prior to traveling into the flexible hose 55 and, ultimately, the recovery tank. Larger debris can get caught within the flexible hose 55 and the recovery assembly and, therefore, is more difficult to clean out than liquid and smaller debris. Trapped, larger debris could affect performance of the surface cleaner 12 but could also lead to foul odors as the debris decays. Capturing the larger debris in the cleaning tool 10 decreases the likelihood of the larger debris getting trapped in the flexible hose 55 and the recovery assembly. Further, capturing liquid within the cleaning tool 10 is desirable, if only to minimize clean-up. Though, if some liquid does enter the flexible hose 55 and/or the recovery assembly, it may be made easier to rinse those components out to avoid stains and odors developing as the cleaning tool 10 can significantly reduce the amount of liquid that may enter those components. Accordingly, the construction of the cleaning tool 10 specifically inhibits ingestion of large debris and, in some implementations, liquids from entering the various internal systems (e.g., the recovery pathway) of the extraction cleaner. Likewise, the construction of the cleaning tool 10 enables easy access to sanitize/clean internal components and surfaces of the body 26. The cleaning tool 10 is also beneficial for effectively cleaning foul messes (e.g., pet vomit) from a surface without causing a user to inadvertently touch the mess with their hands (e.g., such as when the mess leaks through a paper towel during a traditional cleaning procedure). Advantageously, the cleaning tool 10 can be configured to attach to a variety of surface cleaning apparatuses.

The device disclosed herein is further summarized in the following paragraphs and is further characterized by combinations of any and all various aspects described herein.

According to one aspect of the present invention, an extraction cleaner includes an accessory hose and a suction source. The extraction cleaner includes a hose in fluid communication with the suction source. A cleaning tool that is adapted to couple with the hose includes a tool housing that defines a suction pathway in fluid communication with the suction source. The suction source includes a body that defines an access opening to a tool interior, a suction nozzle that defines a tool nozzle inlet in communication with the suction pathway, an adapter coupling that defines an outlet to the suction pathway and is configured to selectively couple the tool with the hose, and a filter receptacle that is disposed within the tool interior and includes a filter material that is configured to capture debris within the filter receptacle while allowing air to flow through the suction pathway.

According to the present invention, a filter receptacle includes a frame that defines openings and filter material is disposed within the openings.

According to yet another aspect of the present invention, a filter material includes a pore size in a range of 40-100 µm.

According to still another aspect of the present invention, a body includes a first body portion and a second body portion removable from the first body portion to access debris or recovered fluid disposed within a tool interior through an access opening.

According to another aspect of the present invention, a filter receptacle is removable from a tool housing through an access opening.

According to yet another aspect of the present invention, a filter receptacle includes engagement features that are configured to uncouple a filter receptacle from a body to access debris captured by the filter receptacle.

According to still another aspect of the present invention, a space is provided between a bottom surface of a filter receptacle and an interior surface of a body.

According to another aspect of the present invention, a tool housing includes a window, and a tool interior is viewable therethrough.

According to yet another aspect of the present invention, at least one baffle is disposed within a tool interior to direct debris away from an outlet to a suction pathway.

According to still another aspect of the present invention, at least one baffle includes a first baffle coupled with an upper interior surface of a body and a second baffle coupled with a lower interior surface of the body.

According to another aspect of the present invention, a cleaning tool is adapted to couple with a hose of an extraction cleaner. The cleaning tool includes a tool housing that defines a suction pathway. The suction pathway includes a body that defines an access opening to a tool interior, a suction nozzle that defines a tool nozzle inlet in communication with the suction pathway, an adapter coupling that is configured to selectively attach the cleaning tool to the extraction cleaner hose, the adapter coupling defining an outlet to the suction pathway, and a filter receptacle disposed within the tool interior and configured to capture debris within the filter receptacle while allowing air to flow through the suction pathway.

According to the present invention, a filter receptacle includes a frame that defines openings and a filter material that is disposed within the openings.

According to still another aspect of the present invention, a body includes a first body portion and a second body portion that is removable from the first body portion to access recovered fluid disposed within a tool interior.

According to another aspect of the present invention, at least one baffle is disposed within a tool interior to direct debris away from an outlet to a suction pathway.

According to yet another aspect of the present invention, at least one baffle includes a first baffle coupled with an upper interior surface of a body and a second baffle coupled with a lower interior surface of the body.

According to still another aspect of the present invention, a tool housing includes a window, and a tool interior is viewable therethrough.

According to another aspect of the present invention, a filter material includes a pore size of 50 µm or less.

According to yet another aspect of the present invention, a cleaning tool for selective attachment to an extraction cleaner includes an accessory hose and a suction source. The tool housing defines a suction pathway that includes a first body portion, a second body portion selectively coupled to the first body portion that thereby defines a tool interior, a suction nozzle disposed at a forward portion of the tool housing that defines a tool nozzle inlet in communication with the suction pathway, and an adapter coupling that is configured to receive one of a wand and an accessory hose and defines an outlet to the suction pathway, and a removable filter basket disposed within the tool interior and including a filter material configured to capture debris within the removable filter basket while allowing air to flow through the suction pathway.

According to still another aspect of the present invention, a removable filter basket defines a frame that defines openings, and at least one mesh region is positioned within the openings.

According to another aspect of the present invention, openings are disposed at a forward portion of a removable filter basket. A rearward portion of the removable filter basket adjacent an outlet to a suction pathway is solid.

According to yet another aspect of the present invention, a suction nozzle defines a suction channel that is disposed between a tool nozzle inlet and a basket inlet.

According to still another aspect of the present invention, a space is provided between a bottom surface of a removable filter basket and a lower interior surface of a second body portion.

According to another aspect of the present invention, a depth of a space is within a range of 0.5-5 mm.

According to yet another aspect of the present invention, a tool housing includes a window, and a tool interior is viewable therethrough.

According to still another aspect of the present invention, a mesh region includes a pore size of 50 µm or less.

According to another aspect of the present invention, at least one baffle is disposed within a tool interior to direct debris away from an outlet to a suction pathway.

According to yet another aspect of the present invention, at least one baffle includes a first baffle coupled with an upper interior surface of a first body portion and a second baffle coupled with a lower interior surface of a second body portion.

It will be understood by one having ordinary skill in the art that construction of the described invention and other components is not limited to any specific material. Other exemplary embodiments of the invention disclosed herein may be formed from a wide variety of materials, unless described otherwise herein.

For purposes of this invention, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention, as shown in the exemplary embodiments, is illustrative only. Although only a few embodiments of the present innovations have been described in detail in this invention, those skilled in the art who review this invention will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connectors or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations.

## Claims

1. An extraction cleaner (12) including an accessory hose (55) and a suction source (66), the extraction cleaner (12) comprising:
a hose (55) in fluid communication with the suction source (66); and
a cleaning tool (10) adapted to couple with the hose (55), comprising:
a tool housing (14) defining a suction pathway (22) in fluid communication with the suction source (66), comprising:
a body (26) defining an access opening (30) to a tool interior (34);
a suction nozzle (38) defining a tool nozzle inlet (42) in communication with the suction pathway (22); and
an adapter coupling (46) defining an outlet (54) to the suction pathway (22) and configured to selectively couple the tool (14) with the hose (55); and
a filter receptacle (18) disposed within the tool interior (34) and including a filter material (138) configured to capture debris within the filter receptacle (18) while allowing air to flow through the suction pathway (22)
**characterized in that**:
the filter receptacle (18) includes a frame (130) defining openings (134) and the filter material (138) is disposed within the openings (134).

2. The extraction cleaner (12) of claim 1, wherein the openings (134) are disposed at a forward portion of the filter receptacle (18).

3. The extraction cleaner (12) of any one of claims 1 and 2, wherein the filter material (138) comprises a pore size in a range of 40-100 µm.

4. The extraction cleaner (12) of any one of claims 1-3, wherein the filter material (138) includes a pore size of 50 µm or less.

5. The extraction cleaner (12) of any one of claims 1-4, wherein a rearward portion of the filter receptacle (18) adjacent the outlet (54) to the suction pathway (22) is solid.

6. The extraction cleaner (12) of any one of claims 1-5, wherein the body (26) includes a first body portion (112) and a second body portion (116) removable from the first body portion (112), thereby providing selective access to debris or recovered fluid disposed within the tool interior (34) through the access opening (30).

7. The extraction cleaner (12) of any one of claims 1-6, wherein the filter receptacle (18) is removable from the tool housing (14) through the access opening (30).

8. The extraction cleaner (12) of any one of claims 1-7, wherein the filter receptacle (18) comprises engagement features (160) configured to uncouple the filter receptacle (18) from the body (26).

9. The extraction cleaner (12) of any one of claims 1-8, wherein a space (120) is provided between a bottom surface (124) of the filter receptacle (18) and an interior surface (126) of the body (26).

10. The extraction cleaner (12) of any one of claims 1-9, wherein the tool housing (14) includes a window (56) and the tool interior (34) is viewable therethrough.

11. The extraction cleaner (12) of any one of claims 1-10, further comprising:
at least one baffle (170) disposed within the tool interior (34) configured to direct debris away from the outlet (54) to the suction pathway (22).

12. The extraction cleaner (12) of claim 11, wherein the at least one baffle (170) includes a first baffle (174) coupled with an upper interior surface (178) of the body (26) and a second baffle (182) coupled with a lower interior surface (126) of the body (26).

## Patentansprüche

1. Extraktionsreinigungsgerät (12) mit einem Zubehörteilschlauch (55) und einer Saugquelle (66), wobei das Extraktionsreinigungsgerät (12) versehen ist mit:
einem Schlauch (55) in Fließverbindung mit der Saugquelle (66) und
einem Reinigungswerkzeug (10), das zum Anschluss an den Schlauch (55) ausgestaltet ist, wobei das Reinigungswerkzeug aufweist:
ein Werkzeuggehäuse (14), das einen Saugweg (22) in Fließverbindung mit der Saugquelle (66) definiert und das versehen ist mit:
einem Körper (26), der eine Zugangsöffnung (30) zu einem Werkzeuginnenraum (34) definiert,
einer Saugdüse (38), die einen Saugdüseneinlasse (42) in Verbindung mit dem Saugweg (22) definiert, und
einer Adapterkupplung (46), die einen Auslass (54) des Saugweges (22) definiert und dazu ausgestattet ist, um das Werkzeug (14) selektiv mit dem Schlauch (55) zu koppeln, und
eine Filteraufnahme (18), die innerhalb des Werkzeuginnenraums (34) angeordnet ist und ein Filtermaterial (138) enthält, das dazu ausgestaltet ist, Schmutz innerhalb der Filteraufnahme (18) aufzufangen und dabei Luft durch den Saugweg (22) fließen zu lassen,
**dadurch gekennzeichnet, dass**
die Filteraufnahme (18) einen Rahmen (130) umfasst, der Öffnungen (134) definiert, und das Filtermaterial (138) sich innerhalb der Öffnungen (134) befindet.

2. Extraktionsreinigungsgerät (12) nach Anspruch 1, wobei die Öffnungen (134) in einem vorderen Bereich der Filteraufnahme (18) angeordnet sind.

3. Extraktionsreinigungsgerät (12) nach einem der Ansprüche 1 und 2, wobei das Filtermaterial (138) eine Porengröße in einem Bereich von 40-100 µm hat.

4. Extraktionsreinigungsgerät (12) nach einem der Ansprüche 1-3, wobei das Filtermaterial (138) eine Porengröße von 50 µm oder weniger hat.

5. Extraktionsreinigungsgerät (12) nach einem der Ansprüche 1-4, wobei ein hinterer Bereich der Filteraufnahme (18), der benachbart zum Auslass (54) zum Saugweg (22) liegt, vollwandig ist.

6. Extraktionsreinigungsgerät (12) nach einem der Ansprüche 1-5, wobei der Körper (26) ein erstes Körperteil (112) und von dem ersten Körperteil (112) abnehmbares zweites Körperteil (116) aufweist, wodurch durch die Zugangsöffnung (30) selektiv Zugang zu Schmutz oder zurückgewonnener Flüssigkeit innerhalb des Werkzeuginnenraums (34) geboten wird.

7. Extraktionsreinigungsgerät (12) nach einem der Ansprüche 1-6, wobei die Filteraufnahme (18) durch die Zugangsöffnung (30) aus dem Werkzeuggehäuse (14) entnehmbar ist.

8. Extraktionsreinigungsgerät (12) nach einem der Ansprüche 1-7, wobei die Filteraufnahme (18) Eingriffsmerkmale (160) aufweist, die dazu ausgestaltet sind, um die Filteraufnahme (18) von dem Körper (26) zu entkoppeln.

9. Extraktionsreinigungsgerät (12) nach einem der Ansprüche 1-8, wobei ein Zwischenraum (120) zwischen einer Unterseite (124) der Filteraufnahme (18) und einer Innenfläche (126) des Körpers (26) gebildet ist.

10. Extraktionsreinigungsgerät (12) nach einem der Ansprüche 1-9, wobei das Werkzeugehäuse (14) ein Fenster (56) umfasst und durch dieses der Werkzeuginnenraum (34) sichtbar ist.

11. Extraktionsreinigungsgerät (12) nach einem der Ansprüche 1-10, weiterhin mit wenigstens einer im Werkzeuginnenraum (34) angeordneten Leitwand (170), die dazu ausgestaltet ist, um Schmutz weg vom Auslass (54) zum Saugweg (22) zu leiten.

12. Extraktionsreinigungsgerät (12) nach einem der Ansprüche 1-11, wobei die wenigstens eine Leitwand (170) eine erste Leitwand (174), die mit einer oberen Innenfläche (178) des Körpers (26) verbunden ist, und eine zweite Leitwand (182) umfasst, die mit einer unteren Innenfläche (126) des Körpers (26) verbunden ist.

## Revendications

1. Nettoyeur par extraction (12) comprenant un tuyau accessoire (55) et une source d'aspiration (66), le nettoyeur par extraction (12) comprenant :
un tuyau (55) en communication fluidique avec la source d'aspiration (66) ; et
un outil de nettoyage (10) adapté pour se coupler au tuyau (55), comprenant :
un boîtier d'outil (14) définissant un trajet d'aspiration (22) en communication fluidique avec la source d'aspiration (66), comprenant :
un corps (26) définissant une ouverture d'accès (30) vers un intérieur d'outil (34) ;
une buse d'aspiration (38) définissant une entrée de buse d'outil (42) en communication avec le trajet d'aspiration (22) ; et
un couplage adaptateur (46) définissant une sortie (54) vers le trajet d'aspiration (22) et configuré pour coupler sélectivement l'outil (14) au tuyau (55) ; et
un réceptacle filtrant (18) disposé dans l'intérieur d'outil (34) et comprenant un matériau filtrant (138) configuré pour capturer des débris dans le réceptacle filtrant (18) tout en permettant à l'air de s'écouler à travers le trajet d'aspiration (22)
**caractérisé en ce que** :
le réceptacle filtrant (18) comprend un cadre (130) définissant des ouvertures (134) et le matériau filtrant (138) est disposé dans les ouvertures (134).

2. Nettoyeur par extraction (12) selon la revendication 1, dans lequel les ouvertures (134) sont disposées au niveau d'une partie avant du réceptacle filtrant (18).

3. Nettoyeur par extraction (12) selon l'une quelconque des revendications 1 et 2, dans lequel le matériau filtrant (138) présente une taille de pores dans une plage de 40 à 100 µm.

4. Nettoyeur par extraction (12) selon l'une quelconque des revendications 1 à 3, dans lequel le matériau filtrant (138) présente une taille de pores de 50 µm ou moins.

5. Nettoyeur par extraction (12) selon l'une quelconque des revendications 1 à 4, dans lequel une partie arrière du réceptacle filtrant (18) adjacente à la sortie (54) vers le trajet d'aspiration (22) est pleine.

6. Nettoyeur par extraction (12) selon l'une quelconque des revendications 1 à 5, dans lequel le corps (26) comprend une première partie de corps (112) et une deuxième partie de corps (116) amovible par rapport à la première partie de corps (112), permettant ainsi un accès sélectif aux débris ou au fluide récupéré disposé dans l'intérieur d'outil (34) par l'intermédiaire de l'ouverture d'accès (30).

7. Nettoyeur par extraction (12) selon l'une quelconque des revendications 1 à 6, dans lequel le réceptacle filtrant (18) est amovible par rapport au boîtier d'outil (14) par l'intermédiaire de l'ouverture d'accès (30).

8. Nettoyeur par extraction (12) selon l'une quelconque des revendications 1 à 7, dans lequel le réceptacle filtrant (18) comprend des éléments d'engagement (160) configurés pour découpler le réceptacle filtrant (18) du corps (26).

9. Nettoyeur par extraction (12) selon l'une quelconque des revendications 1 à 8, dans lequel un espace (120) est ménagé entre une surface inférieure (124) du réceptacle filtrant (18) et une surface intérieure (126) du corps (26).

10. Nettoyeur par extraction (12) selon l'une quelconque des revendications 1 à 9, dans lequel le boîtier d'outil (14) comprend une fenêtre (56) et l'intérieur d'outil (34) est visible à travers celle-ci.

11. Nettoyeur par extraction (12) selon l'une quelconque des revendications 1 à 10, comprenant en outre:
au moins un déflecteur (170) disposé dans l'intérieur d'outil (34) et configuré pour diriger les débris à l'écart de la sortie (54) vers le trajet d'aspiration (22).

12. Nettoyeur par extraction (12) selon la revendication 11, dans lequel l'au moins un déflecteur (170) comprend un premier déflecteur (174) couplé à une surface intérieure supérieure (178) du corps (26) et un deuxième déflecteur (182) couplé à une surface intérieure inférieure (126) du corps (26).
